# EUROPÄISCHE PATENTANMELDUNG

(11) **EP 2 375 303 A1**
(43) Veröffentlichungstag der Anmeldung: **12.10.2011**
(21) Anmeldenummer: 10159371.3
(22) Anmeldetag: 08.04.2010
(51) Int. Cl.: G06F 1/16

(54) **Notebook mit einem Gehäuse**

(71) Anmelder: Siemens Aktiengesellschaft, 80333 München (DE)
(72) Erfinder: Gasde, Christian, 76275, Ettlingen (DE); Saisila, Chartchai, 76133, Karlsruhe (DE)

(57) **Zusammenfassung**

Es wird ein Notebook mit einem Gehäuse vorgeschlagen, welches ein Gehäuseteil (1) zur Aufnahme mindestens eines Eingabe-und/oder Bedienmoduls (2, 3, 4) aufweist. Dadurch, dass das Gehäuseteil (1) eine Vertiefung (5, 6, 7) zur Aufnahme des mindestens einen Eingabe- und/oder Bedienmoduls (2, 3, 4) aufweist und dass die Vertiefung (5, 6, 7) mit einem Schlitz (8, 9, 10) versehen ist zur Durchführung eines Flachbandkabels (11, 12, 13) des Eingabe- und/oder Bedienmoduls (2, 3, 4), kann das Eingabe- und/oder Bedienmodul einfach und schnell in das Gehäuseteil (1) montiert werden.

## Beschreibung

Die Erfindung betrifft ein Notebook mit einem Gehäuse, welches ein Gehäuseteil zur Aufnahme mindestens eines Eingabe-und/oder Bedienmoduls aufweist.

Derartige Computer sind in vielfältiger Form - beispielsweise aus dem Siemens-Katalog ST 70, Seite 7/2, Ausgabe 2009 - bekannt. Diese weisen gewöhnlich ein Eingabemodul in Form eines Tastaturmoduls auf, das im Rahmen der Notebook-Fertigung in eine dafür vorgesehene Aussparung im Gehäuseteil eingesetzt wird. Mittels einer unter dem Tastaturmodul angeordneten Platte wird das Tastaturmodul im Gehäuseteil gehalten, wobei das Tastaturmodul und die Platte verschraubt werden. Nachteilig ist der hohe Montageaufwand, der mehrere Schritte umfasst.

Der vorliegenden Erfindung liegt die Aufgabe zugrunde, ein Notebook der eingangs genannten Art zu schaffen, in welches das mindestens eine Eingabe- und/oder Bedienmodul einfach montiert werden kann.

Diese Aufgabe wird dadurch gelöst, dass das Gehäuseteil eine Vertiefung zur Aufnahme des mindestens einen Eingabe-und/oder Bedienmoduls aufweist und dass die Vertiefung mit einem Schlitz versehen ist zur Durchführung eines Flachbandkabels des Eingabe- und/oder Bedienmoduls.

Vorteilhaft ist die einfache und schnelle Montage des Eingabemoduls. Auf eine Platte unter dem Eingabe- und/oder Bedienmodul, z. B. ein Modul in Form eines Tastaturmoduls, im Gehäuseteil sowie auf die Verschraubung dieser Platte mit dem Tastaturmodul kann verzichtet werden, wodurch einerseits mehr Raum zur Aufnahme von sonstigen elektronischen Komponenten geschaffen wird und andererseits Fertigungskosten vermindert werden.

In einer Ausgestaltung der Erfindung ist vorgesehen, dass das Gehäuseteil eine weitere Vertiefung zur Aufnahme eines weiteren Eingabe- und/oder Bedienmoduls aufweist, wobei die weitere Vertiefung mit einem weiteren Schlitz versehen ist zur Durchführung eines Flachbandkabels des Eingabe- und/oder Bedienmoduls. Der Zusammenbau des Notebooks wird dadurch weiter vereinfacht, der Montageaufwand weiter verringert.

In einer weiteren Ausgestaltung der Erfindung weist das Gehäuseteil eine Abdeckung mit einer Aussparung für das mindestens eine Eingabemodul auf. Eine derartige Maßnahme verhindert weitgehend das Eindringen von Staub in den Gehäuseinnenraum.

Dadurch, dass das Gehäuseteil ein Magnesium-Spritzgussteil ist, werden die Anforderungen im Hinblick auf das EMV-Verhalten erfüllt; auf eine gesonderte Metallisierung des Gehäuseteils kann verzichtet werden, wobei darüber hinaus eine sehr gute Abfuhr der Wärme vom Innenraum des Gehäuseteils nach außen gewährleistet wird.

In einer bevorzugten Ausgestaltung der Erfindung sind die Abdeckung und/oder jedes der Eingabemodule in die jeweilige Vertiefung eingeklebt, wodurch jeweils ein sicherer Sitz dieser Komponenten bewirkt wird.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
Figur 1 ein Gehäuseteil eines Notebooks in einer perspektivischen Ansicht,
Figur 2 die Oberseite eines Gehäuseteils in einer Explosionsdarstellung und
Figur 3 die Unterseite eines Gehäuseteils in einer Explosionsdarstellung.

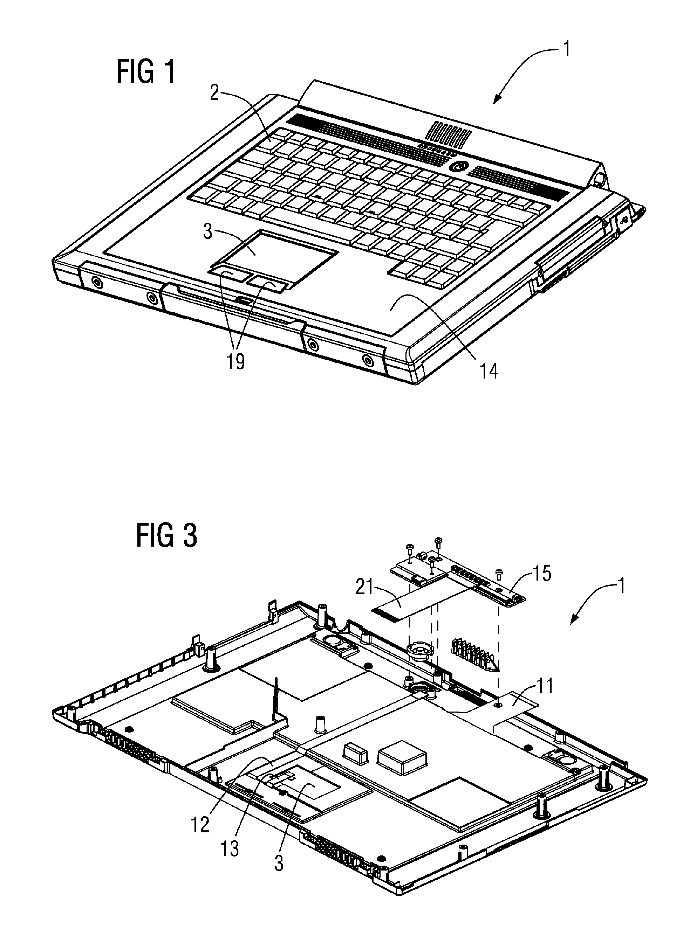

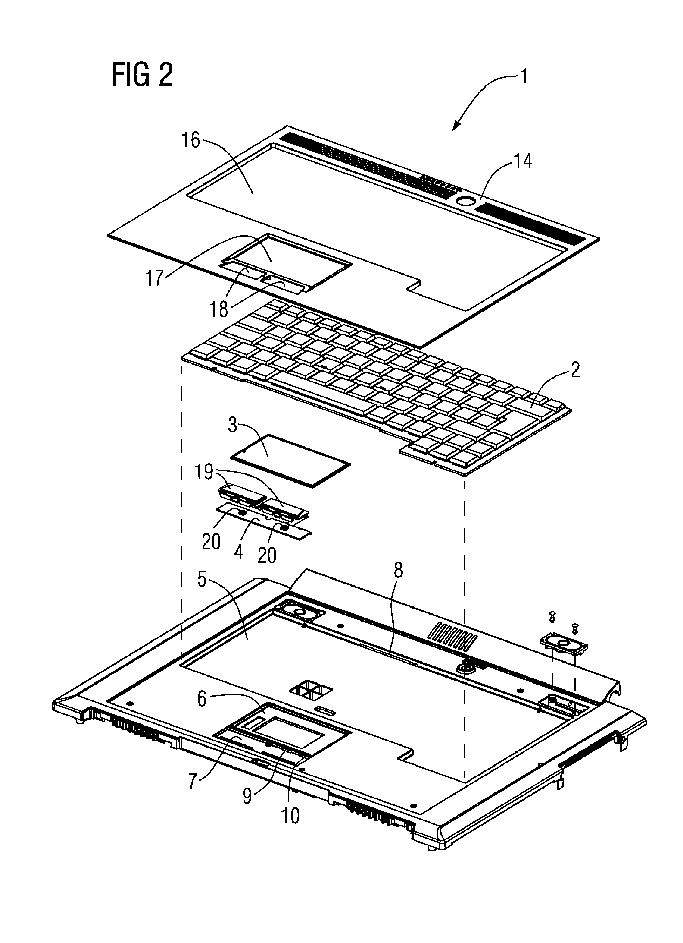

Die in den Figuren 1 bis 3 gleichen Teile sind mit gleichen Bezugszeichen versehen.

In den Figuren 1 bis 3 ist mit 1 ein Gehäuseteil eines Industrie-Notebooks bezeichnet, welches Eingabe- und/oder Bedienmodule in Form eines Tastaturmoduls 2, eines Touchpadmoduls 3 und einer mit zwei Mikroschaltern 20 besetzten Mouse-Flexleitung 4 umfasst, wobei zur Betätigung der beiden Mikroschalter 20 Tastenkappen 19 vorgesehen sind. Ein weiteres Gehäuseteil, das an dem Gehäuseteil 1 schwenkbar gelagert und zur Aufnahme einer Anzeigeeinheit des Notebooks vorgesehen ist, ist zur Erläuterung der Erfindung ohne Bedeutung und daher im vorliegenden Ausführungsbeispiel nicht dargestellt.

Das Gehäuseteil 1 ist mit Vertiefungen 5, 6, 7 versehen, von denen die Vertiefung 5 zur Aufnahme des Tastaturmoduls 2, die Vertiefung 6 zur Aufnahme des Touchpadmoduls 3 und die Vertiefung 7 zur Aufnahme der Mouse-Flexleitung 4 vorgesehen ist. Die Vertiefungen 5, 6, 7 weisen geeignete Schlitze 8, 9, 10 auf, um die Module 2, 3, 4 über Flachbandkabel 11, 12, 13 an einem oder mehreren geeigneten Controllern oder einem Adapter 15, der über ein weiteres Flachbandkabel 21 mit einem hier nicht dargestellten Motherboard verbunden ist, an der Unterseite des Gehäuseteils 1 anzuschließen (Figur 3). Mittels einer Abdeckung 14, welche Aussparungen 16, 17, 18 für die Module 2, 3, 4 aufweist, wird verhindert, dass Staub in das Gehäuseteil 1 eindringt. Sowohl die Abdeckung 14 ist in das Gehäuseteil 1, als auch jedes der Module 2, 3, 4 ist in die jeweilige Vertiefung 5, 6, 7 eingeklebt, um einerseits einen festen und sicheren Sitz der Module in den Vertiefungen und der Abdeckung 14 im Gehäuseteil 1 zu bewirken und andererseits ohne Werkzeuge die Teile schnell zu einem kompakten Notebook zusammenbauen zu können.

## Patentansprüche

1. Notebook mit einem Gehäuse, welches ein Gehäuseteil (1) zur Aufnahme mindestens eines Eingabe- und/oder Bedienmoduls (2, 3, 4) aufweist, **dadurch gekennzeichnet,**
- **dass** das Gehäuseteil (1) eine Vertiefung (5, 6, 7) zur Aufnahme des mindestens einen Eingabe- und/oder Bedienmoduls (2, 3, 4) aufweist und
- **dass** die Vertiefung (5, 6, 7) mit einem Schlitz (8, 9, 10) versehen ist zur Durchführung eines Flachbandkabels (11, 12, 13) des Eingabe- und/oder Bedienmoduls (2, 3, 4).

2. Notebook nach Anspruch 1, **dadurch gekennzeichnet, dass** das Gehäuseteil (1) eine weitere Vertiefung (5, 6, 7) zur Aufnahme eines weiteren Eingabe- und/oder Bedienmoduls (2, 3, 4) aufweist, wobei die weitere Vertiefung (5, 6, 7) mit einem weiteren Schlitz (8, 9, 10) versehen ist zur Durchführung eines weiteren Flachbandkabels (11, 12, 13) des weiteren Eingabe- und/oder Bedienmoduls (2, 3, 4).

3. Notebook nach Anspruch 2, **dadurch gekennzeichnet, dass** das Gehäuseteil (1) eine Abdeckung (14) mit einer Aussparung (16, 17, 18) für das mindestens eine Eingabe- und/oder Bedienmodul (2, 3, 4) und/oder das weitere Eingabe- und/oder Bedienmodul (2, 3, 4) aufweist.

4. Notebook nach Anspruch 2 oder 3, **dadurch gekennzeichnet, dass** jedes der Eingabemodule (2, 3, 4) in die jeweilige Vertiefung (5, 6, 7) und/oder die Abdeckung (14) in das Gehäuseteil (1) eingeklebt ist.

5. Notebook nach einem der Ansprüche 1 bis 4, **dadurch gekennzeichnet, dass** das Gehäuseteil (1) ein Magnesium-Spritzgussteil ist.

6. Notebook nach einem der Ansprüche 2 bis 5, **dadurch gekennzeichnet, dass** eines der Eingabe- und/oder Bedienmodule (2, 3, 4) ein Tastaturmodul (2) und das andere der Eingabe-und/oder Bedienmodule (2, 3, 4) ein Touchpadmodul (3) ist.
